# EUROPÄISCHE PATENTSCHRIFT

(11) **EP 4 015 813 B1**
(45) Veröffentlichungstag und Bekanntmachung des Hinweises auf die Patenterteilung: **11.09.2024**
(21) Anmeldenummer: 21204789.8
(22) Anmeldetag: 26.10.2021
(51) Int. Cl.: F02K 9/64, F02K 9/97

(54) **BRENNKAMMER, VERFAHREN ZUR HERSTELLUNG EINER BRENNKAMMER UND TRIEBWERK**
COMBUSTION CHAMBER, METHOD OF MANUFACTURING A COMBUSTION CHAMBER AND ENGINE
CHAMBRE DE COMBUSTION, PROCÉDÉ DE FABRICATION D'UNE CHAMBRE DE COMBUSTION ET MOTEUR

(30) Priorität: 17.12.2020 DE 102020133967
(43) Veröffentlichungstag der Anmeldung: 22.06.2022
(73) Patentinhaber: ArianeGroup GmbH, 82024 Taufkirchen (DE)
(72) Erfinder: Winter, Stefan, 85560 Ebersberg (DE); Malisz, Martin, 81373 München (DE)
(74) Vertreter: Schicker, Silvia

(56) Entgegenhaltungen:
- DE-A1- 102018 102 222
- DE-T2- 69 918 452
- US-A- 3 613 207

## Beschreibung

Die Erfindung betrifft eine insbesondere zur Verwendung in einem Triebwerk geeignete Brennkammer sowie ein Verfahren zur Herstellung einer derartigen Brennkammer. Ferner betrifft die Erfindung ein mit einer derartigen Brennkammer ausgestattetes Triebwerk.

In modernen Triebwerken, die zum Einsatz in Raketen und Satelliten geeignet sind, wird üblicherweise Wasserstoff mit Sauerstoff verbrannt und dadurch Schubkraft erzeugt. Durch die Verwendung von Wasserstoff als Treibstoff kann eine hohe Energieausbeute und folglich ein hoher spezifischer Impuls des Triebwerks erzielt werden. Bei der Verbrennung von Wasserstoff werden jedoch insbesondere in einer Brennkammer des Triebwerks hohe Verbrennungstemperaturen erreicht, die zu einer hohen thermischen Belastung der Brennkammerkomponenten führen. Zur Verwendung in einem Triebwerk vorgesehene Brennkammern sind daher üblicherweise doppelwandig ausgebildet und umfassen eine einen Brennraum der Brennkammer umgebende Innenwand sowie eine koaxial zu der Innenwand angeordnete Außenwand, die die im Betrieb der Brennkammer auf die Brennkammer wirkenden mechanischen Lasten trägt. Zwischen der Innenwand und der Außenwand sind Kühlkanäle ausgebildet, die seitlich durch sich zwischen der Innenwand und der Außenwand erstreckende Kühlkanalstege begrenzt werden. Eine derartige Brennkammerarchitektur ist beispielsweise in der DE 10 2016 212 314 A1 beschrieben.

Im Betrieb des Triebwerks werden die Kühlkanäle von einem Kühlmittel durchströmt. Bei einer regenerativen Kühlung des Triebwerks wird als Kühlmittel eine Treibstoffkomponente, insbesondere Wasserstoff verwendet. Während der Verbrennung in einem Brennraum der Brennkammer entstehende Reaktionswärme kann dann über die aus einem wärmeleitfähigen Material, beispielsweise einer Kupferlegierung, bestehende Innenwand der Brennkammer an das die Kühlkanäle durchströmende Kühlmittel übertragen und abtransportiert werden.

Bei derzeit in Triebwerken eingesetzten Brennkammern sind die Innenwand und die Kühlkanalstege üblicherweise einstückig ausgebildet. Beispielsweise kann die Innenwand im Bereich ihrer Außenfläche mit einer die Kühlkanalstege bildenden Rippenstruktur versehen sein, die durch mechanische Bearbeitung, beispielsweise Fräsen, in die Außenfläche der Innenwand eingebracht werden kann. Zwischen den Rippen bzw. Kühlkanalstegen vorhandene Zwischenräume werden anschließend mit Wachs gefüllt, um eine ebene Auftragsfläche für eine galvanisch aufzutragende Außenwand zu bilden. Beispielsweise kann die Außenwand aus einer dünnen Kupferlegierungsschicht und einer darüber liegenden Nickellegierungsschicht bestehen, die nacheinander galvanisch auf die durch Auswachsen der Kühlkanäle gebildete ebene Auftragsfläche aufgetragen werden. Schließlich werden die Kühlkanäle durch Ausschmelzen des zwischen die Kühlkanalstege eingebrachten Wachses freigelegt. Das ausgeschmolzene Wachs, üblicherweise eine Graphit/Öl-Emulsion, muss dann entsorgt werden.

Die DE 10 2010 007 272 A1 beschreibt eine regenerativ gekühlte Düsenerweiterung für eine Raketenbrennkammer, die eine erste Wand und eine zweite Wand sowie zwischen der ersten und der zweiten Wand angeordnete Kühlkanäle umfasst. Die Kühlkanäle werden durch Kühlkanalstege seitlich begrenzt, welche einstückig mit der ersten Wand ausgebildet sind. Von der ersten Wand abgewandte Enden der Kühlkanalstege sind in einer Schwalbenschwanzform ausgebildet und werden bei der Verbindung der zweiten Wand mit den Kühlkanalstegen in Vertiefungen aufgenommen, die in der zweiten Wand ausgebildet sind. Durch eine Umformung der zweiten Wand wird ein Formschluss zwischen den schwalbenschwanzförmigen Enden der Kühlkanalstege und den Vertiefungen hergestellt und dadurch die zweite Wand mit der ersten Wand verbunden.

Aus der DE 10 2016 212 314 A1 ist eine Brennkammer mit einem Brennraum, einer den Brennraum umgebende ersten Wand sowie einer Mehrzahl von Kühlkanalstegen bekannt, die sich von einer Oberfläche der ersten Wand erstrecken und zueinander benachbarte Kühlkanäle voneinander trennen. Die Kühlkanalstege haben an ihrem von der Oberfläche der ersten Wand abgewandten Ende einen umgebogenen Abschnitt, der einen zu dem Kühlkanalsteg benachbarten Kühlkanal zumindest teilweise abdeckt.

Aus der US 3,613,207 B ist eine Brennkammer bekannt, bei der die Kühlkanale der Innenwand mittels Walzdrähten verschlossen werden, die in die Kühlkanäle eingesetzt werden und anschließend stoffschlüssig mit den benachbarten Kühlkanalstegen verbunden werden. Vor dem stoffschlüssigen Verbbinden können die Walzdrähte mittels einer Rollvorrichtung in die gewünschte Position gebracht werden.

Der Erfindung liegt die Aufgabe zugrunde, eine einfach herzustellende Brennkammer anzugeben, die insbesondere zur Verwendung in einem Triebwerk geeignet ist. Ferner liegt der Erfindung die Aufgabe zugrunde ein vereinfachtes Verfahren zur Herstellung einer insbesondere zur Verwendung in einem Triebwerk geeigneten Brennkammer anzugeben. Schließlich liegt der Erfindung die Aufgabe zugrunde, ein mit einer derartigen Brennkammer ausgestattetes Triebwerk bereitzustellen.

Diese Aufgabe wird durch eine Brennkammer mit den Merkmalen des Anspruchs 1, ein Verfahren zur Herstellung einer Brennkammer mit den Merkmalen des Anspruchs 7 und ein Triebwerk mit den Merkmalen des Anspruchs 14 gelöst.

Eine zur Verwendung in einem Triebwerk, beispielsweise einem Raketentriebwerk oder einem Satellitentriebwerk, geeignete Brennkammer umfasst einen Brennraum, in dem im Betrieb der Brennkammer ein Treibstoff verbrannt und dadurch Schubkraft erzeugt wird. Beispielsweise kann dem Brennraum im Betrieb der Brennkammer Sauerstoff und Wasserstoff zugeführt werden. Ferner umfasst die Brennkammer eine den Brennraum begrenzende Brennraumwand sowie eine Mehrzahl von Kühlkanalstegen, die sich von einer von dem Brennraum abgewandten Oberfläche der Brennraumwand erstrecken und zueinander benachbarte Kühlkanäle voneinander trennen. Bei der Brennraumwand kann es sich um eine den Brennraum unmittelbar begrenzende Wand handeln, die vorzugsweise aus einem Material mit einer hohen Wärmeleitfähigkeit, wie zum Beispiel Kupfer oder einer Kupferlegierung besteht. Ferner kann die Brennraumwand mit einer Oberflächenschicht, insbesondere einer hochtemperaturresistenten Beschichtung versehen sein, die die Brennraumwand vor den im Brennraum der Brennkammer vorherrschenden hohen Temperaturen schützt.

Die Kühlkanalstege können als separate Bauteile ausgebildet und durch eine geeignete Fügetechnik, wie zum Beispiel Schweißen oder Löten mit der Brennraumwand verbunden sein. Vorzugsweise sind die Kühlkanalstege jedoch integriert mit der Brennraumwand ausgebildet. Integriert mit der Brennraumwand ausgebildete Kühlkanalstege können beispielsweise durch mechanische Bearbeitung, wie zum Beispiel Fräsen, eines zur Bildung der Brennraumwand und der Kühlkanäle vorgesehenen Halbzeugs gefertigt werden. Alternativ dazu ist auch eine Herstellung der Brennraumwand mit integriert ausgebildeten Kühlkanalstegen durch ein additives Fertigungsverfahren denkbar. Die Kühlkanäle erstrecken sich vorzugsweise im Wesentlichen entlang einer Längsachse der Brennkammer und damit im Wesentlichen senkrecht zu einer Umfangsrichtung der Brennkammer.

Die Kühlkanalstege sind jeweils mit einem Vorsprung versehen, der sich von einer von dem Brennraum abgewandten Stirnfläche der Kühlkanalstege erstreckt. Die von dem Brennraum abgewandte Stirnfläche der Kühlkanalstege erstreckt sich im Wesentlichen parallel zu der von dem Brennraum abgewandten Oberfläche der Brennraumwand. Im Vergleich zu den Kühlkanalstegen weisen die Vorsprünge einen verringerten Querschnitt auf, d. h. in einer Richtung parallel zu der von dem Brennraum abgewandten Oberfläche der Brennraumwand und senkrecht zu einer Längsachse eines durch zwei zueinander benachbarte Kühlkanalstege begrenzten Kühlkanals weisen die Kühlkanalstege jeweils eine größere Abmessung auf als die an den Kühlkanalstegen vorgesehenen Vorsprünge. Entlang der Längsachsen Kühlkanäle weisen die Kühlkanalstege und die daran ausgebildeten Vorsprünge dagegen vorzugsweise im Wesentlichen gleiche Abmessungen auf, d. h. die Kühlkanalstege sind vorzugsweise entlang ihrer gesamten Länge entlang der Längsachsen der Kühlkanäle mit entsprechenden Vorsprüngen versehen.

Schließlich umfasst die Brennkammer eine Mehrzahl von Abdeckelementen. Jedes Abdeckelement erstreckt sich entlang einer Längsachse eines durch zwei zueinander benachbarte Kühlkanalstege begrenzten Kühlkanals zwischen den Vorsprüngen der zueinander benachbarten Kühlkanalstege. Ferner ist jedes Abdeckelement zur Abdeckung des Kühlkanals formschlüssig mit den Vorsprüngen der zwei zueinander benachbarten Kühlkanalstege verbunden. Mit anderen Worten, bei der Brennkammer sind die Kühlkanäle jeweils durch separat voneinander ausgebildete Abdeckelemente verschlossen, die zwischen den Vorsprüngen zweier zueinander benachbarte Kühlkanalstege angeordnet und anschließend formschlüssig mit den Vorsprüngen verbunden werden.

Bei der Herstellung der Brennkammer kann darauf verzichtet werden, die Kühlkanäle zunächst mit Wachs zu füllen, anschließend zu verschließen und schließlich das Wachs wieder auszuschmelzen. Ferner ist das formschlüssige Verbinden der Abdeckelemente mit den Vorsprüngen ein robuster Prozess, der keine engen Toleranzen verlangt. Die Brennkammer ist daher besonders einfach und kostengünstig herstellbar.

Die Abdeckelemente der Brennkammer weisen vorzugsweise jeweils Randabschnitte auf, die auf entsprechenden Stirnflächenabschnitten der zwei zueinander benachbarten Kühlkanalstege aufliegen. Die Randabschnitte eines Abdeckelements erstrecken sich vorzugsweise im Wesentlichen parallel zueinander entlang der Längsachse des mittels des Abdeckelements verschlossenen Kühlkanals. Entsprechend erstrecken sich die Stirnflächenabschnitte der Kühlkanalstege, auf denen die Randabschnitte des Abdeckelements aufliegen, vorzugsweise im Wesentlichen parallel zueinander entlang der Längsachse des mittels des Abdeckelements verschlossenen Kühlkanals.

In einer Richtung parallel zu der von dem Brennraum abgewandten Oberfläche der Brennraumwand und senkrecht zu einer Längsachse eines durch zwei zueinander benachbarte Kühlkanalstege begrenzten Kühlkanals können sich die an den Kühlkanalstegen vorgesehenen Vorsprünge jeweils mittig von der von dem Brennraum abgewandten Stirnfläche der Kühlkanalstege erstrecken. Durch die mittige Anordnung der Vorsprünge an den Kühlkanalstegen sind beidseitig der Vorsprünge verbleibende Stirnflächenabschnitte groß genug, um als sichere Auflagefläche für entsprechende Randabschnitte der Abdeckelemente zu dienen. Jeder Vorsprung eines Kühlkanalstegs kann dann formschlüssig mit zwei Abdeckelementen verbunden sein.

In der fertig montierten Brennkammer entspricht eine Abmessung der an den Kühlkanalstegen vorgesehenen Vorsprünge in einer Richtung senkrecht zu der von dem Brennraum abgewandten Stirnfläche der Kühlkanalstege vorzugsweise im Wesentlichen einer Abmessung der Abdeckelemente in der Richtung senkrecht zu der von dem Brennraum abgewandten Stirnfläche der Kühlkanalstege. Mit anderen Worten, in der fertig montierten Brennkammer bilden die Vorsprünge sowie die formschlüssig mit den Vorsprüngen verbundenen Abdeckelemente eine äußere Brennkammerwand, die durchgängig im Wesentlichen die gleiche Dicke aufweist. Im Gegensatz dazu kann vor der formschlüssigen Verbindung mit den Abdeckelementen die Abmessung der Vorsprünge senkrecht zu der Stirnfläche der Kühlkanalstege etwas größer sein als die entsprechende Abmessung der Abdeckelemente. Dadurch können die Vorsprünge, beispielsweise mittels eines Rollwerkzeugs gut mit den Abdeckelementen verquetscht und dadurch formschlüssig mit den Abdeckelementen verbunden werden.

In der fertig montierten Brennkammer ist eine von dem Brennraum abgewandte Außenfläche der Abdeckelemente vorzugsweise jeweils im Wesentlichen koplanar zu von dem Brennraum abgewandten Stirnflächen der an den Kühlkanalstegen vorgesehenen Vorsprünge ausgerichtet. Die koplanare Ausrichtung der Außenfläche der Abdeckelemente mit den Stirnflächen der Vorsprünge kann bereits durch die oben beschriebene Dimensionierung der Vorsprünge und der Abdeckelemente erreicht werden. Gegebenenfalls kann aber auch nach dem formschlüssigen Verbinden der Abdeckelemente mit den Vorsprüngen noch vorhandenes überschüssiges Material durch ein spanendes Verfahren, wie z.B. Drehen entfernt werden.

Zusätzlich oder alternativ dazu kann die äußere Brennkammerwand, die durch die Abdeckelemente und die an den Kühlkanalstegen vorgesehenen Vorsprünge definiert wird, im Wesentlichen parallel und/oder koaxial zu der Brennraumwand ausgerichtet sein. Die Abdeckelemente können jeweils z.B. durch Erodieren, Lasern oder Stanzen hergestellt sein. Insbesondere können die Abdeckelemente aus einem Metallblech hergestellt sein. Besonders geeignet zur Herstellung der Abdeckelemente ist ein Material mit einer hohen Wärmeleitfähigkeit, wie z.B. Kupfer. Die Abdeckelemente können daher beispielsweise aus einem Kupferblech hergestellt sein.

An einem ersten stirnseitigen Ende werden die Kühlkanäle vorzugsweise durch ein erstes Abschlusselement begrenzt. Beispielsweise können die Kühlkanäle so geformt sein, dass sich die Tiefe der Kühlkanäle in Richtung ihres ersten stirnseitigen Endes verringert. Dies kann beispielsweise dadurch realisiert werden, dass die Dicke der Brennraumwand in Richtung der ersten stirnseitigen Enden der Kühlkanäle zunimmt und der verdickte Bereich der Brennraumwand das erste Abschlusselement bildet. Die Abdeckelemente sind vorzugsweise jeweils formschlüssig mit dem ersten Abschlusselement verbunden.

Dies kann beispielsweise dadurch bewerkstelligt werden, dass an den ersten Abschlusselementen zunächst ein Vorsprung vorgesehen wird, der sich beispielsweise im Wesentlichen senkrecht zu einer von dem Brennraum abgewandten Oberfläche der ersten Abschlusselemente erstreckt. Dieser Vorsprung kann dann, ähnlich wie die an den Kühlkanalstegen ausgebildeten Vorsprünge, beispielsweise mit den Abdeckelementen verquetscht und dadurch formschlüssig mit den Abdeckelementen verbunden werden. Grundsätzlich kann für jeden Kühlkanal und folglich für jedes Abdeckelement ein separater Vorsprung an dem entsprechenden ersten Abschlusselement vorgesehen sein. Es ist jedoch auch denkbar, Vorsprünge oder lediglich einen Vorsprung vorzusehen, die/der sich über mehrere/alle erste Abschlusselemente und folglich mehrere/alle Abdeckelemente erstrecken/erstreckt.

An einem zweiten stirnseitigen Ende werden die Kühlkanäle vorzugsweise durch ein zweites Abschlusselement begrenzt. Beispielsweise können die Kühlkanäle so geformt sein, dass sich die Tiefe der Kühlkanäle in Richtung ihres zweiten stirnseitigen Endes verringert. Dies kann beispielsweise dadurch realisiert werden, dass die Dicke der Brennraumwand in Richtung der zweiten stirnseitigen Enden der Kühlkanäle zunimmt und der verdickte Bereich der Brennraumwand das zweite Abschlusselement bildet. Im Bereich der zweiten stirnseitigen Enden der Kühlkanäle ist vorzugsweise keine formschlüssige Verbindung der zweiten Abschlusselemente mit den Abdeckelementen vorgesehen. Vielmehr ist an den zweiten stirnseitigen Enden der Kühlkanäle zwischen den Abdeckelementen und den zweiten Abschlusselementen jeweils eine Druckausgleichsöffnung vorgesehen.

Die äußere Brennkammerwand, die durch die Abdeckelemente und die an den Kühlkanalstegen vorgesehenen Vorsprünge definiert wird, kann mit einer Oberflächenschicht versehen sein, die auf die von dem Brennraum abgewandte Außenfläche der Abdeckelemente sowie die von dem Brennraum abgewandten Stirnflächen der an den Kühlkanalstegen vorgesehenen Vorsprünge aufgebracht ist. Die Oberflächenschicht ist vorzugsweise so gewählt, dass sie die mechanische Belastbarkeit der Brennkammer verbessert. Beispielsweise kann die äußere Brennkammerwand mit einer Nickelschicht versehen sein.

Wenn die Oberflächenschicht durch Kaltgasspritzen mit anschließender Wärmebehandlung erzeugt wird, verhindern die an den zweiten stirnseitigen Enden der Kühlkanäle vorgesehenen Druckausgleichsöffnungen, dass während der Wärmebehandlung der Druck in den Kühlmittelkanälen zu stark ansteigt. Wenn die Oberflächenschicht dagegen durch ein galvanisches Verfahren erzeugt wird, ist in der Regel keine Wärmebehandlung der Oberflächenschicht erforderlich. Auf die Druckausgleichsöffnungen an den zweiten stirnseitigen Enden der Kühlkanäle sollte dann verzichtet werden, um sicherzustellen, dass die Kühlkanäle in der fertiggestellten Brennkammer dicht sind.

Die Abdeckelemente können dann beispielsweise jeweils formschlüssig mit dem zweiten Abschlusselement verbunden sein. Hierzu kann an den zweiten Abschlusselementen jeweils ein Vorsprung vorgesehen sein, der sich zunächst im Wesentlichen senkrecht zu einer von der Brennkammer abgewandten Oberfläche der zweiten Abschlusselemente erstreckt und dann mit den Abdeckelementen verquetscht und dadurch formschlüssig mit den Abdeckelementen verbunden wird. Grundsätzlich kann für jeden Kühlkanal und folglich für jedes Abdeckelement ein separater Vorsprung an dem entsprechenden zweiten Abschlusselement vorgesehen sein. Es ist jedoch auch denkbar, Vorsprünge oder lediglich einen Vorsprung vorzusehen, die/der sich über mehrere/alle zweite Abschlusselemente und folglich mehrere/alle Abdeckelemente erstrecken/erstreckt.

Bei einem Verfahren zur Herstellung einer zur Verwendung in einem Triebwerk geeigneten Brennkammer wird zunächst eine einen Brennraum begrenzenden Brennraumwand bereitgestellt. Ferner wird eine Mehrzahl von Kühlkanalstegen bereitgestellt, die sich von einer von dem Brennraum abgewandten Oberfläche der Brennraumwand erstrecken und zueinander benachbarte Kühlkanäle voneinander trennen. Die Kühlkanalstege sind jeweils mit einem Vorsprung versehen, der sich von einer von dem Brennraum abgewandten Stirnfläche der Kühlkanalstege erstreckt. Eine Mehrzahl von Abdeckelementen wird derart angeordnet, dass sich jedes Abdeckelement entlang einer Längsachse eines durch zwei zueinander benachbarte Kühlkanalstege begrenzten Kühlkanals zwischen den Vorsprüngen der zueinander benachbarten Kühlkanalstege erstreckt. Schließlich wird jedes Abdeckelement formschlüssig mit den Vorsprüngen zweier zueinander benachbarter Kühlkanalstege verbunden, um den sich zwischen den zueinander benachbarten Kühlkanalstegen erstreckenden Kühlkanal abzudecken.

Die formschlüssige Verbindung zwischen den an den Kühlkanalstegen vorgesehenen Vorsprüngen und den Abdeckelementen kann beispielsweise durch Rollen hergestellt werden. Die an den Kühlkanalstegen vorgesehenen Vorsprünge können jedoch auch durch Verstemmen und/oder Verbördeln formschlüssig mit den Abdeckelementen verbunden werden.

Die Abdeckelemente werden vorzugsweise jeweils so angeordnet, dass Randabschnitte der Abdeckelemente auf entsprechenden Stirnflächenabschnitten der zwei zueinander benachbarten Kühlkanalstege aufliegen. Die an den Kühlkanalstegen vorgesehenen Vorsprünge können sich in einer Richtung parallel zu der von dem Brennraum abgewandten Oberfläche der Brennraumwand und senkrecht zu der Längsachse eines durch zwei zueinander benachbarte Kühlkanalstege begrenzten Kühlkanals jeweils mittig von der von dem Brennraum abgewandten Stirnfläche der Kühlkanalstege erstrecken. Jeder Vorsprung kann dann vorzugsweise formschlüssig mit zwei Abdeckelementen verbunden werden.

Eine Abmessung der an den Kühlkanalstegen vorgesehenen Vorsprünge in einer Richtung senkrecht zu der von dem Brennraum abgewandten Stirnfläche der Kühlkanalstege entspricht vorzugsweise im Wesentlichen einer Abmessung der Abdeckelemente in der Richtung senkrecht zu der von dem Brennraum abgewandten Stirnfläche der Kühlkanalstege. Eine von dem Brennraum abgewandte Außenfläche der Abdeckelemente wird vorzugsweise jeweils im Wesentlichen koplanar zu von dem Brennraum abgewandten Stirnflächen der an den Kühlkanalstegen vorgesehenen Vorsprünge ausgerichtet. Falls erforderlich, kann hierzu ein spanendes Verfahren, beispielsweise Plandrehen eingesetzt werden. Eine äußere Brennkammerwand, die durch die Abdeckelemente und die an den Kühlkanalstegen vorgesehenen Vorsprünge definiert wird, wird im Wesentlichen parallel und/oder koaxial zu der Brennraumwand ausgerichtet.

Die Abdeckelemente können jeweils z.B. durch Erodieren, Lasern oder Stanzen hergestellt werden. Zusätzlich oder alternativ dazu können die Abdeckelemente aus einem Blech, insbesondere einem Metallblech und besonders bevorzugt einem Kupferblech hergestellt werden.

Die Kühlkanäle werden an einem ersten stirnseitigen Ende vorzugsweise jeweils durch ein erstes Abschlusselement begrenzt werden. Die Abdeckelemente können jeweils formschlüssig mit den ersten Abschlusselementen verbunden werden. Beispielsweise kann ein an den ersten Abschlusselementen vorgesehener Vorsprung, der sich beispielsweise im Wesentlichen senkrecht zu einer von der Brennkammer abgewandten Oberfläche der ersten Abschlusselemente erstreckt, mit den Abdeckelementen verquetscht und dadurch formschlüssig mit den Abdeckelementen verbunden werden.

An einem zweiten stirnseitigen Ende werden die Kühlkanäle vorzugsweise jeweils durch ein zweites Abschlusselement begrenzt. Im Bereich der zweiten stirnseitigen Enden der Kühlkanäle wird vorzugsweise keine formschlüssige Verbindung der zweiten Abschlusselemente mit den Abdeckelementen, sondern vielmehr eine zwischen den Abdeckelementen und den zweiten Abschlusselementen angeordnete Druckausgleichsöffnung vorgesehen.

Die äußere Brennkammerwand, die durch die Abdeckelemente und die an den Kühlkanalstegen vorgesehenen Vorsprünge definiert wird, kann mit einer Oberflächenschicht versehen werden, die auf die von dem Brennraum abgewandte Außenfläche der Abdeckelemente sowie die von dem Brennraum abgewandten Stirnflächen der an den Kühlkanalstegen vorgesehenen Vorsprünge aufgebracht wird.

Ein Triebwerk, das insbesondere in Form eines Raketentriebwerks oder eines Satellitentriebwerks ausgestaltet sein kann, ist mit einer oben beschriebenen Brennkammer ausgerüstet.

Bevorzugte Ausführungsformen der Erfindung werden im Folgenden anhand der beigefügten schematischen Zeichnungen näher erläutert, wobei
- Figur 1: eine dreidimensionale Übersichtsdarstellung einer zum Einsatz in einem Raketentriebwerk geeigneten Brennkammer zeigt,
- Figur 2: eine Teilquerschnittsansicht der Brennkammer gemäß Figur 1 zeigt,
- Figuren 3a bis c: ein Verfahren zur Herstellung der Brennkammer gemäß Figur 1 veranschaulichen,
- Figur 4: eine vergrößerte Darstellung eines ersten stirnseitigen Endes eines Kühlkanals der Brennkammer gemäß Figur 1 zeigt und
- Figur 5: eine vergrößerte Darstellung eines zweiten stirnseitigen Endes eines Kühlkanals der Brennkammer gemäß Figur 1 zeigt.

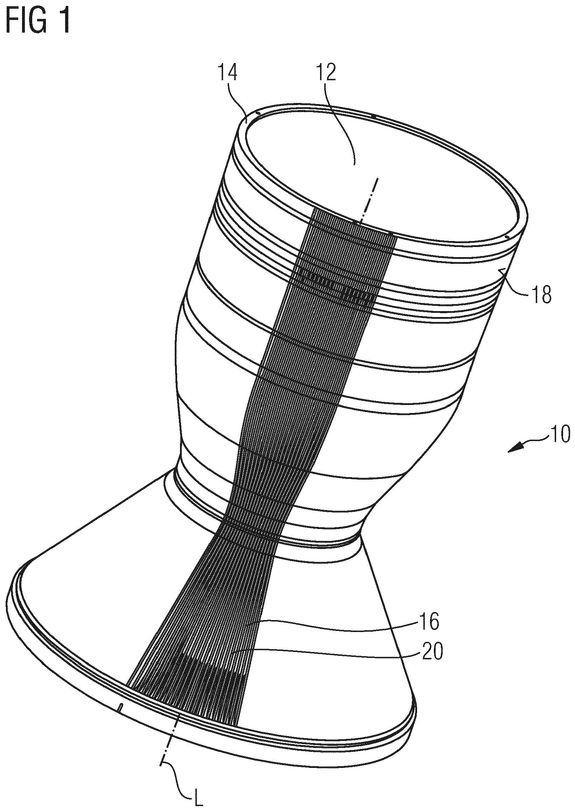

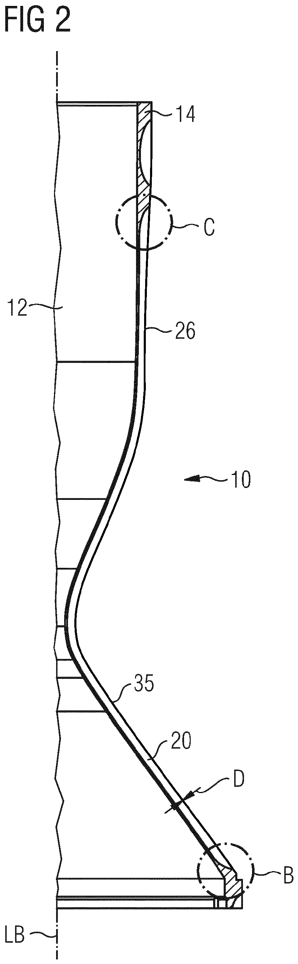

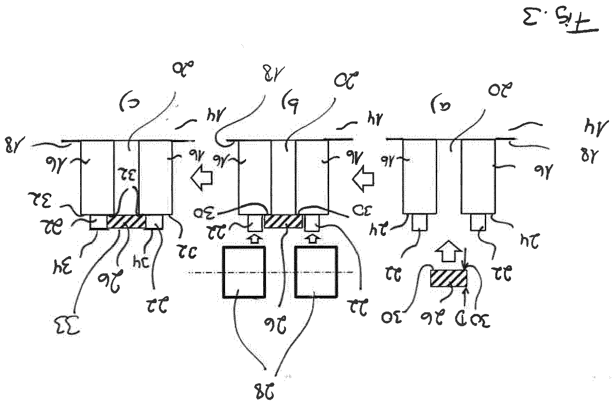

Eine in den Figuren 1 und 2 gezeigte und zum Einsatz in einem Raketentriebwerk geeignete Brennkammer 10 umfasst einen Brennraum 12, in dem im Betrieb der Brennkammer Treibstoff verbrannt und dadurch Schubkraft erzeugt wird. Der Brennraum 12 ist von einer Brennraumwand 14 umgeben. Kühlkanalstege 16 (siehe auch Figuren 3a bis 3c) erstrecken sich von einer von dem Brennraum 12 abgewandten Oberfläche 18 der Brennraumwand 14 und dienen dazu, zueinander benachbarte Kühlkanäle 20 voneinander zu trennen. Die Kühlkanäle 20 erstrecken sich im Wesentlichen entlang einer Längsachse LB der Brennkammer 10 und damit im Wesentlichen senkrecht zu einer Umfangsrichtung der Brennkammer 10. Die Kühlkanalstege 16 sind integriert mit der Brennraumwand 14 ausgebildet und bestehen, ebenso wie die Brennraumwand 14, aus einer gut wärmeleitfähigen Kupferlegierung.

Die Kühlkanalstege 16 sind jeweils mit einem Vorsprung 22 versehen, der sich von einer von dem Brennraum 12 abgewandten Stirnfläche 24 der Kühlkanalstegen 16 erstreckt. Die von dem Brennraum 12 abgewandte Stirnfläche 24 der Kühlkanalstege 16 erstreckt sich im Wesentlichen parallel zu der von dem Brennraum 12 abgewandten Oberfläche 18 der Brennraumwand 14. In einer Richtung parallel zu der von dem Brennraum 12 abgewandten Oberfläche 18 der Brennraumwand 14 und senkrecht zu einer Längsachse L eines durch zwei zueinander benachbarte Kühlkanalstege 16 begrenzten Kühlkanals 20 weisen die Vorsprünge 22 im Vergleich zu den jeweiligen Kühlkanalstegen 16 einen verringerten Querschnitt auf und erstrecken sich jeweils mittig von den Stirnflächen 24 der Kühlkanalstege 16. Entlang der Längsachsen L der Kühlkanäle 20 weisen die Kühlkanalstege 16 und die daran ausgebildeten Vorsprünge 22 dagegen im Wesentlichen gleiche Abmessungen auf, d. h. die Kühlkanalstege 16 sind im Wesentlichen entlang ihrer gesamten Länge entlang der Längsachsen L der Kühlkanäle 20 mit entsprechenden Vorsprüngen 22 versehen.

Ferner umfasst die Brennkammer 10 eine Mehrzahl von Abdeckelementen 26. Die Abdeckelemente 26 sind jeweils durch z.B. Erodieren, Lasern oder Stanzen aus einem Blech, insbesondere einem Kupferblech hergestellt. Wie am besten aus den Figuren 3a und b ersichtlich wird, werden die Abdeckelemente 26 bei der Herstellung der Brennkammer 10 derart angeordnet, dass sich jedes Abdeckelement 26 entlang einer Längsachse L eines durch zwei zueinander benachbarte Kühlkanalstege 16 begrenzten Kühlkanals 20 zwischen den Vorsprüngen 22 der zueinander benachbarten Kühlkanalstege 16 erstreckt. Schließlich wird, wie in Figur 3c gezeigt, jedes Abdeckelement 26 formschlüssig mit den Vorsprüngen 22 zweier zueinander benachbarter Kühlkanalstege 16 verbunden, um den sich zwischen den zueinander benachbarten Kühlkanalstegen 16 erstreckenden Kühlkanal 20 abzudecken.

Die formschlüssige Verbindung zwischen den Abdeckelementen 26 und den Vorsprüngen 22 wird durch Rollen, Verstemmen und/oder Verbördeln hergestellt. In der Figur 3b wird zur Herstellung der formschlüssigen Verbindung zwischen den Abdeckelementen 26 und den Vorsprüngen 22 ein Rollwerkzeug 28 verwendet.

Die Abdeckelemente 26 weisen jeweils Randabschnitte 30 auf, die sich im Wesentlichen parallel zueinander entlang der Längsachsen L der Kühlkanäle erstrecken und auf entsprechenden Stirnflächenabschnitten 32 der zwei zueinander benachbarten Kühlkanalstege 16 aufliegen. Da sich die Vorsprünge 22 jeweils mittig von den Stirnflächen 24 der Kühlkanalstege 16 erstrecken, sind die beidseitig der Vorsprünge 22 verbleibenden Stirnflächenabschnitten 32 groß genug, um als sichere Auflagefläche für entsprechende Randabschnitte zweier Abdeckelemente 26 zu dienen. Dementsprechend kann jeder Vorsprung 22 eines Kühlkanalstegs 16 formschlüssig mit zwei Abdeckelementen 26 verbunden werden.

Wie am besten in Figur 3b zu erkennen ist, ist die Abmessung der Vorsprünge 22 senkrecht zu der Stirnfläche 24 der Kühlkanalstege 16 vor der formschlüssigen Verbindung mit den Abdeckelementen 26 etwas größer als eine entsprechende Abmessung, d.h. eine Dicke D, der Abdeckelemente 26. Dadurch können die Vorsprünge 22 mittels des Rollwerkzeugs 28 gut mit den Abdeckelementen 26 verquetscht und dadurch formschlüssig mit den Abdeckelementen 26 verbunden werden. In der fertig montierten Brennkammer 10 entspricht die Abmessung der Vorsprünge 22 in der Richtung senkrecht zu der Stirnfläche 24 der Kühlkanalstege 16 jedoch im Wesentlichen der Dicke D der Abdeckelemente. In der fertig montierten Brennkammer 10 bilden die Vorsprünge 22 sowie die formschlüssig mit den Vorsprüngen 22 verbundenen Abdeckelemente 26 daher eine äußere Brennkammerwand, die durchgängig im Wesentlichen die gleiche Dicke aufweist.

Ferner ist in der fertig montierten Brennkammer 10 eine von dem Brennraum 12 abgewandte Außenfläche 33 der Abdeckelemente 26 jeweils im Wesentlichen koplanar zu von dem Brennraum 12 abgewandten Stirnflächen 34 der an den Kühlkanalstegen 16 vorgesehenen Vorsprünge 16 ausgerichtet. Die koplanare Ausrichtung der Außenfläche 33 der Abdeckelemente 26 mit den Stirnflächen 34 der Vorsprünge 22 kann bereits durch eine entsprechende Dimensionierung der Vorsprünge 22 und der Abdeckelemente 26 erreicht werden. Gegebenenfalls kann aber auch nach dem formschlüssigen Verbinden der Abdeckelemente 26 mit den Vorsprüngen 22 noch vorhandenes überschüssiges Material durch ein spanendes Verfahren, wie z.B. Drehen entfernt werden.

Eine äußere Brennkammerwand, die durch die Abdeckelemente 26 und die an den Kühlkanalstegen 16 vorgesehenen Vorsprünge 22 definiert wird, ist schließlich im Wesentlichen parallel und koaxial zu der Brennraumwand 14 ausgerichtet. Die äußere Brennkammerwand ist mit einer Oberflächenschicht 35 versehen, die auf die von dem Brennraum abgewandte Außenfläche der Abdeckelemente 26 aufgebracht ist. Ferner sind die von dem Brennraum 12 abgewandten Stirnflächen 34 der an den Kühlkanalstegen 16 vorgesehenen Vorsprünge 22 mit der Oberflächenschicht 35 versehen.

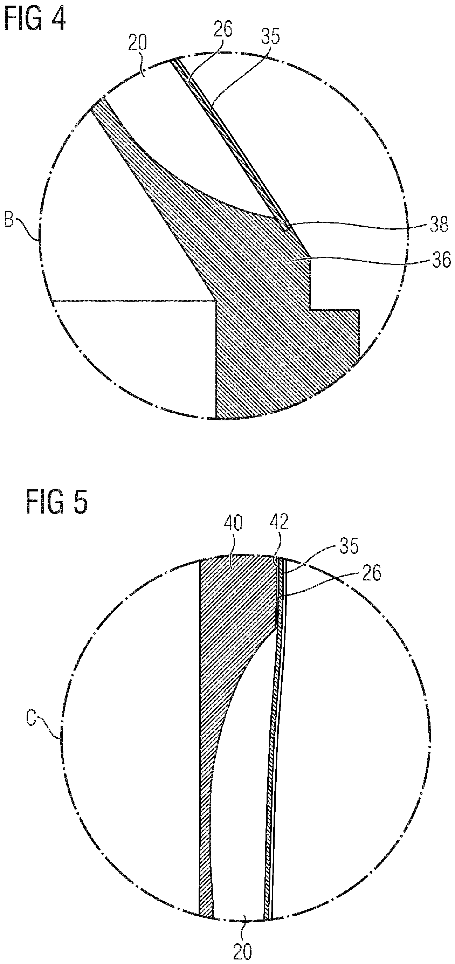

Wie am besten in der vergrößerten Darstellung gemäß Figur 4 zu erkennen ist, werden die Kühlkanäle 20 an einem ersten stirnseitigen Ende jeweils durch ein erstes Abschlusselement 36 begrenzt. Insbesondere sind die Kühlkanäle 20 so geformt, dass sich die Tiefe der Kühlkanäle 20 in Richtung ihres ersten stirnseitigen Endes verringert, indem die Dicke der Brennraumwand 14 in Richtung der ersten stirnseitigen Enden der Kühlkanäle 20 zunimmt und der verdickte Bereich der Brennraumwand 14 das erste Abschlusselement 36 bildet. Die Abdeckelemente 26 sind jeweils formschlüssig mit dem ersten Abschlusselement 36 verbunden.

Die formschlüssige Verbindung der Abdeckelemente 26 mit den ersten Abschlusselementen 36 wird dadurch erzeugt, dass an den ersten Abschlusselementen 36 ein Vorsprung 38 vorgesehen ist, der sich zunächst im Wesentlichen senkrecht zu einer von der Brennkammer 12 abgewandten Oberfläche der ersten Abschlusselemente 36 erstreckt. Dieser Vorsprung 38 wird dann, ähnlich wie die an den Kühlkanalstegen 16 ausgebildeten Vorsprünge 22, mit den Abdeckelementen 26 verquetscht und dadurch formschlüssig mit den Abdeckelementen 26 verbunden.

An einem zweiten stirnseitigen Ende sind die Kühlkanäle 20, wie in Figur 5 gezeigt, durch ein zweites Abschlusselement 40 begrenzt. Insbesondere sind die Kühlkanäle 20 so geformt, dass sich die Tiefe der Kühlkanäle 20 in Richtung ihres zweiten stirnseitigen Endes verringert, indem die Dicke der Brennraumwand 14 in Richtung der zweiten stirnseitigen Enden der Kühlkanäle 20 zunimmt und der verdickte Bereich der Brennraumwand 14 das zweite Abschlusselement 40 bildet. Im Bereich der zweiten stirnseitigen Enden der Kühlkanäle 20 ist keine formschlüssige Verbindung der zweiten Abschlusselemente 40 mit den Abdeckelementen 26 vorgesehen. Vielmehr ist an den zweiten stirnseitigen Enden der Kühlkanäle 20 zwischen den Abdeckelementen 26 und den zweiten Abschlusselementen 40 jeweils eine Druckausgleichsöffnung 42 vorgesehen.

Wenn die Oberflächenschicht 35 auf der von dem Brennraum 12 abgewandten Außenfläche der äußeren Brennkammerwand durch Kaltgasspritzen mit anschließender Wärmebehandlung erzeugt wird, verhindern die an den zweiten stirnseitigen Enden der Kühlkanäle 20 vorgesehenen Druckausgleichsöffnungen 42, dass während der Wärmebehandlung der Druck in den Kühlmittelkanälen 20 zu stark ansteigt. Wenn die Oberflächenschicht 35 dagegen durch ein galvanisches Verfahren erzeugt wird, ist in der Regel keine Wärmebehandlung der Oberflächenschicht 35 erforderlich. Auf die Druckausgleichsöffnungen 42 sollte dann verzichtet werden, um sicherzustellen, dass die Kühlkanäle 20 in der fertiggestellten Brennkammer 10 dicht sind.

Die Abdeckelemente 26 sind dann beispielsweise jeweils formschlüssig auch mit dem zweiten Abschlusselement 40 verbunden. Hierzu kann an den zweiten Abschlusselementen 40 wiederum ein Vorsprung vorgesehen sein, der sich zunächst im Wesentlichen senkrecht zu einer von der Brennkammer 12 abgewandten Oberfläche der zweiten Abschlusselemente 40 erstreckt. Dieser Vorsprung kann dann, ähnlich wie der an den ersten Abschlusselementen 36 ausgebildete Vorsprung 38, mit den Abdeckelementen 26 verquetscht und dadurch formschlüssig mit den Abdeckelementen 26 verbunden.

## Patentansprüche

1. Brennkammer (10) zur Verwendung in einem Triebwerk, die umfasst:
- einen Brennraum (12);
- eine den Brennraum (12) begrenzende Brennraumwand (14);
- eine Mehrzahl von Kühlkanalstegen (16), die sich von einer von dem Brennraum (12) abgewandten Oberfläche (18) der Brennraumwand (14) erstrecken und zueinander benachbarte Kühlkanäle (20) voneinander trennen, wobei die Kühlkanalstege (16) jeweils mit einem Vorsprung (22) versehen sind, der sich von einer von dem Brennraum (12) abgewandten und sich parallel zu der von dem Brennraum (12) abgewandten Oberfläche (18) erstreckenden Stirnfläche (24) der Kühlkanalstege (16) erstreckt, wobei der Vorsprung (22) eines Kühlkanalstegs (16) jeweils in einer Richtung parallel zu der von dem Brennraum (12) abgewandten Oberfläche (18) und senkrecht zu einer Längsachse (L) der zu dem betreffenden Kühlkanalsteg (16) benachbarten Kühlkanäle (20) einen verringerten Querschnitt im Vergleich zu dem Kühlkanalsteg (16) aufweist und jeweils sich mittig von der Stirnfläche des Kühlkanalstegs erstreckt; und
- eine Mehrzahl von Abdeckelementen (26), wobei sich jedes Abdeckelement (26) entlang einer Längsachse (L) eines durch zwei zueinander benachbarte Kühlkanalstege (16) begrenzten Kühlkanals (20) zwischen den Vorsprüngen (22) der zueinander benachbarten Kühlkanalstege (16) erstreckt, **dadurch gekennzeichnet, dass**
jedes Abdeckelement (26) zur Abdeckung des Kühlkanals (20) formschlüssig mit den Vorsprüngen (22) der zwei zueinander benachbarten Kühlkanalstege (16) verbunden ist.

2. Brennkammer nach Anspruch 1,
- wobei die Abdeckelemente (26) jeweils Randabschnitte (30) aufweisen, die auf entsprechenden Stirnflächenabschnitten (32) der zwei zueinander benachbarten Kühlkanalstege (16) aufliegen; und/oder
- wobei sich die an den Kühlkanalstegen (16) vorgesehenen Vorsprünge (22) in einer Richtung parallel zu der von dem Brennraum (12) abgewandten Oberfläche (18) der Brennraumwand (14) und senkrecht zu der Längsachse (L) eines durch zwei zueinander benachbarte Kühlkanalstege (16) begrenzten Kühlkanals (20) jeweils mittig von der von dem Brennraum (12) abgewandten Stirnfläche (24) der Kühlkanalstege (16) erstrecken.

3. Brennkammer nach Anspruch 1 oder 2,
- wobei eine Abmessung der an den Kühlkanalstegen (16) vorgesehenen Vorsprünge (22) in einer Richtung senkrecht zu der von dem Brennraum (12) abgewandten Stirnfläche (24) der Kühlkanalstege (16) im Wesentlichen einer Abmessung der Abdeckelemente (26) in der Richtung senkrecht zu der von dem Brennraum (12) abgewandten Stirnfläche (24) der Kühlkanalstege (16) entspricht; und/oder
- wobei eine von dem Brennraum (12) abgewandte Außenfläche der Abdeckelemente (26) jeweils im Wesentlichen koplanar zu von dem Brennraum (12) abgewandten Stirnflächen (24) der an den Kühlkanalstegen (16) vorgesehenen Vorsprünge (22) ausgerichtet ist; und/oder
- wobei eine äußere Brennkammerwand, die durch die Abdeckelemente (26) und die an den Kühlkanalstegen (16) vorgesehenen Vorsprünge (22) definiert wird, im Wesentlichen parallel und/oder koaxial zu der Brennraumwand (14) ausgerichtet ist.

4. Brennkammer nach einem der Ansprüche 1 bis 3,
wobei die Abdeckelemente (26) jeweils durch Erodieren, Lasern oder Stanzen hergestellt sind und/oder wobei die Abdeckelemente (26) jeweils aus einem Metallblech, insbesondere einem Kupferblech hergestellt sind.

5. Brennkammer nach einem der Ansprüche 1 bis 4,
- wobei die Kühlkanäle (20) an einem ersten stirnseitigen Ende jeweils durch ein erstes Abschlusselement (36) begrenzt werden und wobei die Abdeckelemente (26) jeweils formschlüssig mit dem ersten Abschlusselement (36) verbunden sind; und/oder
- wobei die Kühlkanäle (20) an einem zweiten stirnseitigen Ende jeweils durch ein zweites Abschlusselement (40) begrenzt werden und wobei zwischen den Abdeckelementen (26) und den zweiten Abschlusselementen (40) jeweils eine Druckausgleichsöffnung (42) vorgesehen ist.

6. Brennkammer nach einem der Ansprüche 1 bis 5,
wobei die äußere Brennkammerwand, die durch die Abdeckelemente (26) und die an den Kühlkanalstegen (16) vorgesehenen Vorsprünge (22) definiert wird, mit einer Oberflächenschicht (35) versehen ist, die auf die von dem Brennraum (12) abgewandte Außenfläche der Abdeckelemente (26) sowie die von dem Brennraum (12) abgewandten Stirnflächen (34) der an den Kühlkanalstegen (16) vorgesehenen Vorsprünge (22) aufgebracht ist.

7. Verfahren zur Herstellung einer zur Verwendung in einem Triebwerk geeigneten Brennkammer (10) mit den Schritten:
- Bereitstellen einer einen Brennraum (12) begrenzenden Brennraumwand (14);
- Bereitstellen einer Mehrzahl von Kühlkanalstegen (16), die sich von einer von dem Brennraum (12) abgewandten Oberfläche (18) der Brennraumwand (14) erstrecken und zueinander benachbarte Kühlkanäle (20) voneinander trennen, wobei die Kühlkanalstege (16) jeweils mit einem Vorsprung (22) versehen sind, der sich von einer von dem Brennraum (12) abgewandten Stirnfläche (24) der Kühlkanalstege (16) erstreckt;
- Anordnen einer Mehrzahl von Abdeckelementen (26) derart, dass sich jedes Abdeckelement (26) entlang einer Längsachse (L) eines durch zwei zueinander benachbarte Kühlkanalstege (16) begrenzten Kühlkanals (20) zwischen den Vorsprüngen (22) der zueinander benachbarten Kühlkanalstege (16) erstreckt; und
- anschließendes formschlüssiges Verbinden eines jeden Abdeckelements (26) mit den Vorsprüngen (22) zweier zueinander benachbarter Kühlkanalstege (16), um den sich zwischen den zueinander benachbarten Kühlkanalstegen (16) erstreckenden Kühlkanal (20) abzudecken.

8. Verfahren nach Anspruch 7,
wobei die Abdeckelemente (26) jeweils durch Rollen, Verstemmen und/oder Verbördeln formschlüssig mit den Vorsprüngen (22) der zueinander benachbarten Kühlkanalstege (16) verbunden werden.

9. Verfahren nach Anspruch 7 oder 8,
- wobei die Abdeckelemente (26) jeweils so angeordnet werden, dass Randabschnitte (30) der Abdeckelemente (26) auf entsprechenden Stirnflächenabschnitten (32) der zwei zueinander benachbarten Kühlkanalstege (16) aufliegen; und/oder
- wobei sich die an den Kühlkanalstegen (16) vorgesehenen Vorsprünge (22) in einer Richtung parallel zu der von dem Brennraum (12) abgewandten Oberfläche (18) der Brennraumwand (14) und senkrecht zu der Längsachse (L) eines durch zwei zueinander benachbarte Kühlkanalstege (16) begrenzten Kühlkanals (20) jeweils mittig von der von dem Brennraum (12) abgewandten Stirnfläche (24) der Kühlkanalstege (16) erstrecken.

10. Verfahren nach einem der Ansprüche 7 bis 9,
- wobei eine Abmessung der an den Kühlkanalstegen (16) vorgesehenen Vorsprünge (22) in einer Richtung senkrecht zu der von dem Brennraum (12) abgewandten Stirnfläche (24) der Kühlkanalstege (16) im Wesentlichen einer Abmessung der Abdeckelemente (26) in der Richtung senkrecht zu der von dem Brennraum (12) abgewandten Stirnfläche (24) der Kühlkanalstege (16) entspricht; und/oder
- wobei eine von dem Brennraum (12) abgewandte Außenfläche der Abdeckelemente (26) jeweils im Wesentlichen koplanar zu von dem Brennraum (12) abgewandten Stirnflächen (24) der an den Kühlkanalstegen (16) vorgesehenen Vorsprünge (22) ausgerichtet wird; und/oder
- wobei eine äußere Brennkammerwand, die durch die Abdeckelemente (26) und die an den Kühlkanalstegen (16) vorgesehenen Vorsprünge (22) definiert wird, im Wesentlichen parallel und/oder koaxial zu der Brennraumwand (14) ausgerichtet wird.

11. Verfahren nach einem der Ansprüche 7 bis 10,
wobei die Abdeckelemente (26) jeweils durch Erodieren, Lasern oder Stanzen hergestellt werden und/oder wobei die Abdeckelemente (26) jeweils aus einem Metallblech, insbesondere einem Kupferblech hergestellt werden.

12. Verfahren nach einem der Ansprüche 7 bis 11,
- wobei die Kühlkanäle (20) an einem ersten stirnseitigen Ende jeweils durch ein erstes Abschlusselement (36) begrenzt werden und wobei die Abdeckelemente (26) jeweils formschlüssig mit den ersten Abschlusselementen (36) verbunden werden; und/oder
- wobei die Kühlkanäle (20) an einem zweiten stirnseitigen Ende jeweils durch ein zweites Abschlusselement (40) begrenzt werden und wobei zwischen den Abdeckelementen (26) und den zweiten Abschlusselementen (40) jeweils eine Druckausgleichsöffnung (42) vorgesehen wird.

13. Verfahren nach einem der Ansprüche 7 bis 12,
wobei die äußere Brennkammerwand, die durch die Abdeckelemente (26) und die an den Kühlkanalstegen (16) vorgesehenen Vorsprünge (22) definiert wird, mit einer Oberflächenschicht (35) versehen wird, die auf die von dem Brennraum (12) abgewandte Außenfläche der Abdeckelemente (26) sowie die von dem Brennraum (12) abgewandten Stirnflächen (34) der an den Kühlkanalstegen (16) vorgesehenen Vorsprünge (22) aufgebracht ist.

14. Triebwerk mit einer Brennkammer (10) nach einem der Ansprüche 1 bis 6.

## Claims

1. A combustion chamber (10) for use in an engine, the combustion chamber (10) comprising:
- a combustion space (12);
- a combustion space wall (14) delimiting the combustion space (12);
- a plurality of cooling channel webs (16) extending from a surface (18) of the combustion space wall (14) which faces away from the combustion space (12) and separating mutually adjacent cooling channels (20) from one another, the cooling channel webs (16) each being provided with a projection (22) extending from an end face (24) of the cooling channel webs (16) which faces away from the combustion space (12) and extends substantially parallel to the surface (18) of the combustion space wall (14), wherein the projection (22) of a cooling channel web (16) in a direction parallel to the suface (18) facing away from the combustion space (12) and perpendicular to a longitudinal axis (L) of the cooling channnels (20) adjacent to the respective cooling channel web (16) has a reduced cross-section compared to the cooling channel web (16) and extends centrally from the end face of the cooling channel web; and
- a plurality of cover elements (26), each cover element (26) extending along a longitudinal axis (L) of a cooling channel (20) delimited by two mutually adjacent cooling channel webs (16) between the projections (22) of the mutually adjacent cooling channel webs (16), **characterized in that** each cover element (26) is form-fittingly connected to the projections (22) of the two mutually adjacent cooling channel webs (16) in order to cover the cooling channel (20).

2. The combustion chamber according to claim 1,
- wherein the cover elements (26) each have edge portions (30) which rest on corresponding end face portions (32) of the two mutually adjacent cooling channel webs (16); and/or
- wherein the projections (22) provided on the cooling channel webs (16) extend in a direction parallel to the surface (18) of the combustion space wall (14) which faces away from the combustion space (12) and perpendicular to the longitudinal axis (L) of a cooling channel (20) delimited by two mutually adjacent cooling channel webs (16), centrally from the end face (24) of the cooling channel webs (16) which faces away from the combustion space (12).

3. The combustion chamber according to claim 1 or 2,
- wherein a dimension of the projections (22) provided on the cooling channel webs (16) in a direction perpendicular to the end face (24) of the cooling channel webs (16) which faces away from the combustion space (12) substantially corresponds to a dimension of the cover elements (26) in the direction perpendicular to the end face (24) of the cooling channel webs (16) which faces away from the combustion space (12); and/or
- wherein an outer surface of the cover elements (26) which faces away from the combustion space (12) is aligned substantially coplanar with end faces (24) of the projections (22) provided on the cooling channel webs (16) which face away from the combustion space (12); and/or
- wherein an outer combustion chamber wall defined by the cover elements (26) and the projections (22) provided on the cooling channel webs (16) is oriented substantially parallel and/or coaxial to the combustion space wall (14).

4. The combustion chamber according to any one of claims 1 to 3,
wherein the cover elements (26) are each produced by eroding, laser cutting or punching and/or wherein the cover elements (26) are each produced from a metal sheet, in particular a copper sheet.

5. The combustion chamber according to any one of claims 1 to 4,
- wherein the cooling channels (20) are delimited at a first end facing end by a first end element (36) and wherein the cover elements (26) are form-fittingly connected to the first end element (36); and/or
- wherein the cooling channels (20) are delimited at a second end facing end by a second end element (40) and wherein a pressure equalization opening (42) is provided between the cover elements (26) and the second end elements (40).

6. The combustion chamber according to any one of claims 1 to 5,
wherein the outer combustion chamber wall defined by the cover elements (26) and the projections (22) provided on the cooling channel webs (16) is provided with a surface layer (35) applied to the outer surface of the cover elements (26) which faces away from the combustion space (12) and to the end faces (34) of the projections (22) provided on the cooling channel webs (16) which face away from the combustion space (12).

7. A method of manufacturing a combustion chamber (10) suitable for use in an engine, the method comprising the steps:
- providing a combustion space wall (14) delimiting a combustion space (12);
- providing a plurality of cooling channel webs (16) extending from a surface (18) of the combustion space wall (14) which faces away from the combustion space (12) and separating mutually adjacent cooling channels (20) from one another, the cooling channel webs (16) each being provided with a projection (22) extending from an end face (24) of the cooling channel webs (16) which faces away from the combustion space (12);
- arranging a plurality of cover elements (26) such that each cover element (26) extends along a longitudinal axis (L) of a cooling channel (20) delimited by two mutually adjacent cooling channel webs (16) between the projections (22) of the mutually adjacent cooling channel webs (16); and
- subsequent form-fittingly connecting each cover element (26) to the projections (22) of two mutually adjacent cooling channel webs (16) in order to cover the cooling channel (20) extending between the mutually adjacent cooling channel webs (16).

8. The method according to claim 7,
wherein the cover elements (26) are from-fittingly connected to the projections (22) of the mutually adjacent cooling channel webs (16) by rolling, caulking and/or flanging.

9. The method according to claim 7 or 8,
- wherein the cover elements (26) are arranged such that edge portions (30) of the cover elements (26) rest on corresponding end face portions (32) of the two mutually adjacent cooling channel webs (16); and/or
- wherein the projections (22) provided on the cooling channel webs (16) extend in a direction parallel to the surface (18) of the combustion space wall (14) which faces away from the combustion space (12) and perpendicular to the longitudinal axis (L) of a cooling channel (20) delimited by two mutually adjacent cooling channel webs (16), centrally from the end face (24) of the cooling channel webs (16) which faces away from the combustion space (12).

10. The method according to any one of claims 7 to 9,
- wherein a dimension of the projections (22) provided on the cooling channel webs (16) in a direction perpendicular to the end face (24) of the cooling channel webs (16) which faces away from the combustion space (12) substantially corresponds to a dimension of the cover elements (26) in the direction perpendicular to the end face (24) of the cooling channel webs (16) which faces away from the combustion space (12); and/or
- wherein an outer surface of the cover elements (26) which faces away from the combustion space (12) is aligned substantially coplanar with end faces (24) of the projections (22) provided on the cooling channel webs (16) which face away from the combustion space (12); and/or
- wherein an outer combustion chamber wall defined by the cover elements (26) and the projections (22) provided on the cooling channel webs (16) is oriented substantially parallel and/or coaxial to the combustion space wall (14).

11. The method according to any one of claims 7 to 10,
wherein the cover elements (26) are produced by eroding, laser processing or punching and/or wherein the cover elements (26) are produced from a metal sheet, in particular a copper sheet.

12. The method according to any one of claims 7 to 11,
- wherein the cooling channels (20) are delimited at a first end facing end by a first end element (36) and wherein the cover elements (26) are form-fittingly connected to the first end element (36); and/or
- wherein the cooling channels (20) are delimited at a second end facing end by a second end element (40) and wherein a pressure equalization opening (42) is provided between the cover elements (26) and the second end elements (40).

13. The method according to any one of claims 7 to 12,
wherein the outer combustion chamber wall defined by the cover elements (26) and the projections (22) provided on the cooling channel webs (16) is provided with a surface layer (35) applied to the outer surface of the cover elements (26) which face away from the combustion space (12) and to the end faces (34) of the projections (22) provided on the cooling channel webs (16) which face away from the combustion space (12).

14. Engine comprising a combustion chamber (10) according to any one of claims 1 to 6.

## Revendications

1. Chambre de combustion (10), destinée à être utilisée dans un moteur, comprenant:
- un espace de combustion (12);
- une paroi de chambre de combustion (14) délimitant l'espace de combustion (12);
- une pluralité d'entretoises de canaux de refroidissement (16) qui s'étendent depuis une surface (18) de la paroi (14) de l'espace de combustion, opposée à la chambre de combustion (12), et qui séparent les uns des autres des canaux de refroidissement (20) voisins les uns des autres, les entretoises de canaux de refroidissement (16) étant chacune pourvues d'une saillie (22) qui s'étend depuis une face frontale (24) des entretoises de canaux de refroidissement (16), opposée à la chambre de combustion (12) et s'étendant parallèlement à la surface (18) opposée à la chambre de combustion (12), la saillie (22) d'une entretoise de canaux de refroidissement (16) présentant, dans une direction parallèle à la surface (18) opposée à la chambre de combustion (12) et perpendiculaire à un axe longitudinal (L) des canaux de refroidissement (20) adjacents à l'entretoise de canaux de refroidissement (16) concernée, une section transversale réduite par rapport à l'entretoise de canaux de refroidissement (16) et s'étendant respectivement au milieu de la face frontale de l'entretoise de canaux de refroidissement; et
- une pluralité d'éléments de recouvrement (26), chaque élément de recouvrement (26) s'étendant le long d'un axe longitudinal (L) d'un canal de refroidissement (20) délimité par deux entretoises de canaux de refroidissement (16) adjacentes entre elles, entre les saillies (22) des entretoises de canaux de refroidissement (16) adjacentes entre elles, **caractérisée en ce que**
chaque élément de recouvrement (26) destiné à recouvrir le canal de refroidissement (20) est relié par complémentarité de forme aux saillies (22) des deux entretoises de canaux de refroidissement (16) adjacentes entre elles.

2. Chambre de combustion selon la revendication 1,
- dans laquelle les éléments de recouvrement (26) présentent chacun des sections de bord (30) qui reposent sur des sections de surface frontale (32) correspondantes des deux entretoises de canaux de refroidissement (16) adjacentes entre elles; et/ou
- les saillies (22) disposée sur les entretoises de canaux de refroidissement (16) s'étendant dans une direction parallèle à la surface (18) de la paroi de chambre de combustion (14) opposée à l'espace de combustion (12) et perpendiculaire à l'axe longitudinal (L) d'un canal de refroidissement (20) délimité par deux entretoises de canaux de refroidissement (16) adjacentes entre elles, respectivement au milieu de la surface frontale (24) des entretoises de canaux de refroidissement (16) opposée à l'espace de combustion (12).

3. Chambre de combustion selon la revendication 1 ou 2,
- dans laquelle une dimension des saillies (22) disposées sur les entretoises de canaux de refroidissement (16) dans une direction perpendiculaire à la surface frontale (24) des entretoises de canaux de refroidissement (16) opposée à l'espace de combustion (12) correspond sensiblement à une dimension des éléments de recouvrement (26) dans la direction perpendiculaire à la surface frontale (24) des entretoises de canaux de refroidissement (16) opposée à l'espace de combustion (12); et/ou
- dans laquelle une surface extérieure des éléments de recouvrement (26), opposée à l'espace de combustion (12), est orientée respectivement de manière sensiblement coplanaire par rapport aux surfaces frontales (24), opposées à l'espace de combustion (12), des saillies (22) disposées sur les entretoises de canaux de refroidissement (16); et/ou
- dans laquelle une paroi extérieure d'espace de combustion qui est définie par les éléments de recouvrement (26) et les saillies (22) disposées sur les entretoises de canaux de refroidissement (16), est orientée sensiblement parallèlement et/ou coaxialement à la paroi d'espace de combustion (14).

4. Chambre de combustion selon l'une quelconque des revendications 1 à 3, dans laquelle les éléments de recouvrement (26) sont respectivement fabriqués par érosion, au laser ou par estampage et/ou les éléments de recouvrement (26) sont respectivement fabriqués à partir d'une tôle métallique, en particulier d'une tôle de cuivre.

5. Chambre de combustion selon l'une quelconque des revendications 1 à 4,
- dans laquelle les canaux de refroidissement (20) sont délimités chacun à une première extrémité frontale par un premier élément de fermeture (36) et dans laquelle les éléments de recouvrement (26) sont reliés chacun par complémentarité de forme au premier élément de fermeture (36); et/ou
- dans laquelle les canaux de refroidissement (20) sont délimités chacun à une deuxième extrémité frontale par un deuxième élément de fermeture (40) et dans laquelle une ouverture d'équilibrage de pression (42) est ménagée entre les éléments de recouvrement (26) et les deuxièmes éléments de fermeture (40).

6. Chambre de combustion selon l'une quelconque des revendications 1 à 5, dans laquelle la paroi extérieure d'espace de combustion, qui est définie par les éléments de recouvrement (26) et les saillies (22) disposées sur les entretoises de refroidissement (16), est pourvue d'une couche de surface (35) qui est appliquée sur la surface extérieure des éléments de recouvrement (26) opposée à l'espace de combustion (12) ainsi que sur les surfaces frontales (34) des saillies (22) disposées sur les entretoises de canaux de refroidissement (16) opposées à l'espace de combustion (12).

7. Procédé de fabrication d'une chambre de combustion (10) adaptée pour être utilisée dans un moteur, comprenant les étapes consistant à:
- fournir une paroi d'espace de combustion (14) délimitant un espace de combustion (12);
- fournir une pluralité d'entretoises de canaux de refroidissement (16) qui s'étendent depuis une surface (18) de la paroi d'espace de combustion (14) opposée à l'espace de combustion (12) et qui séparent les uns des autres les canaux de refroidissement (20) adjacents les uns des autres, dans lequel les entretoises de canaux de refroidissement (16) étant chacune pourvues d'une saillie (22) qui s'étend depuis une face frontale (24) des entretoises de canaux de refroidissement (16) opposée à l'espace de combustion (12);
- disposer une pluralité d'éléments de recouvrement (26) de telle sorte que chaque élément de recouvrement (26) s'étende le long d'un axe longitudinal (L) d'un canal de refroidissement (20) délimité par deux entretoises de canaux de refroidissement (16) adjacentes entre elles, entre les saillies (22) des entretoises de canaux de refroidissement (16) adjacentes entre elles; et
- relier ensuite par complémentarité de forme chaque élément de recouvrement (26) aux saillies (22) de deux entretoises de canaux de refroidissement (16) adjacentes entre elles, afin de recouvrir le canal de refroidissement (20) s'étendant entre les entretoises de canaux de refroidissement (16) adjacentes entre elles.

8. Procédé selon la revendication 7,
dans lequel les éléments de recouvrement (26) étant respectivement reliés par complémentarité de forme, par roulage, matage et/ou sertissage, aux saillies (22) des entretoises de canaux de refroidissement (16) adjacentes entre elles.

9. Procédé selon la revendication 7 ou 8,
- dans lequel les éléments de recouvrement (26) sont respectivement disposés de telle sorte que des sections de bord (30) des éléments de recouvrement (26) reposent sur des sections de surface frontale (32) correspondantes des deux entretoises de canaux de refroidissement (16) adjacentes entre elles; et/ou
- dans lequel les saillies (22) disposée sur les entretoises de canaux de refroidissement (16) s'étendent dans une direction parallèle à la surface (18) de la paroi de chambre de combustion (14) opposée à l'espace de combustion (12) et perpendiculaire à l'axe longitudinal (L) d'un canal de refroidissement (20) délimité par deux entretoises de canaux de refroidissement (16) adjacentes entre elles, respectivement au milieu de la surface frontale (24) des entretoises de canaux de refroidissement (16) opposée à l'espace de combustion (12).

10. Procédé selon l'une quelconque des revendications 7 à 9,
- dans lequel une dimension des saillies (22) disposées sur les entretoises de canaux de refroidissement (16) dans une direction perpendiculaire à la surface frontale (24) des entretoises de canaux de refroidissement (16) opposée à l'espace de combustion (12) correspond sensiblement à une dimension des éléments de recouvrement (26) dans la direction perpendiculaire à la surface frontale (24) des entretoises de canaux de refroidissement (16) opposée à l'espace de combustion (12); et/ou
- dans lequel une surface extérieure des éléments de recouvrement (26), opposée à l'espace de combustion (12), est respectivement orientée de manière sensiblement coplanaire par rapport aux surfaces frontales (24), opposées à l'espace de combustion (12), des saillies (22) disposées sur les entretoises de canaux de refroidissement (16); et/ou
- dans lequel une paroi de chambre de combustion extérieure, définie par les éléments de recouvrement (26) et les saillies (22) disposées sur les entretoises de canaux de refroidissement (16), est orientée sensiblement parallèlement et/ou coaxialement à la paroi d'espace de combustion (14).

11. Procédé selon l'une quelconque des revendications 7 à 10,
dans lequel les éléments de recouvrement (26) sont respectivement fabriqués par érosion, au laser ou par estampage et/ou les éléments de recouvrement (26) sont respectivement fabriqués à partir d'une tôle métallique, en particulier d'une tôle de cuivre.

12. Procédé selon l'une quelconque des revendications 7 à 11,
- dans lequel les canaux de refroidissement (20) sont délimités à une première extrémité frontale respectivement par un premier élément de fermeture (36) et dans lequel les éléments de recouvrement (26) sont reliés respectivement par complémentarité de forme aux premiers éléments de fermeture (36); et/ou
- dans lequel les canaux de refroidissement (20) sont délimités à une deuxième extrémité frontale respectivement par un deuxième élément de fermeture (40) et dans lequel une ouverture d'équilibrage de pression (42) étant ménagée respectivement entre les éléments de recouvrement (26) et les deuxièmes éléments de fermeture (40).

13. Procédé selon l'une quelconque des revendications 7 à 12,
dans lequel la paroi extérieure d'espace de combustion, qui est définie par les éléments de recouvrement (26) et les saillies (22) disposées sur les entretoises de canaux de refroidissement (16), est pourvue d'une couche de surface (35) qui est appliquée sur la surface extérieure des éléments de recouvrement (26), opposée à l'espace de combustion (12), ainsi que sur les surfaces frontales (34) des saillies (22) disposées sur les entretoises de canaux de refroidissement (16), opposées à l'espace de combustion (12).

14. Moteur doté d'une chambre de combustion selon l'une quelconque des revendications 1 à 6.
